# EUROPEAN PATENT SPECIFICATION

(11) **EP 1 221 386 B1**
(45) Date of publication and mention of the grant of the patent: **10.01.2007**
(21) Application number: 01128213.4
(22) Date of filing: 28.11.2001
(51) Int. Cl.: B60C 27/10

(54) **Locking device for snow chains**
Verriegelungsvorrichtung für Reifenketten
Dispositif de verrouillage pour chaînes de neige

(30) Priority: 04.01.2001 IT MI010012
(43) Date of publication of application: 10.07.2002
(73) Proprietor: Thule S.p.A., 23847 Molteno (Lecco) (IT)
(72) Inventor: Airoldi, Romolo, 23900 Lecco (IT); Arrigoni Neri, Marco, 23811 Ballabio (Lecco) (IT)
(74) Representative: Petruzziello, Aldo

(56) References cited:
- EP-A- 0 993 970

## Description

The present invention relates to a locking device for snow chains or anti-skid devices to be mounted on vehicle tires.

When a vehicle is on a road surface covered with snow, sleet or ice, its tires do not have a good grip and dangerous swerving or skidding of the vehicle can occur. In order to avoid these problems, it is customary to use anti-skid devices, commonly called snow chains.

Snow chains, normally mounted on the driving wheels of the vehicle, bite into the snow and/or ice deposited on the road surface, increasing friction on the road and allowing the vehicle tires to achieve a good grip.

As is known, a snow chain generally consists of two side elements (chains, flexible cables, steel wires, ropes or the like) which during use are closed in a ring on the inner side and the outer side of the wheel, respectively. These side elements are connected by a series of chain portions variously disposed to achieve friction on the road, the whole being completed by a device for applying tension to said elements, known as a tensioner.

Types of chains widely available on the market have an inner side portion consisting of a flexible inner ring that can be opened to achieve widening thereof during fitting, so that it can be applied to the inner part of the wheel of the vehicle. Said inner ring normally consists of a metal cable covered by a continuous or discontinuous sheathing.

Said chains of the prior art have an inner locking closure whereby one end of the cable of the inner ring is provided with hollow, elongated engagement means wherein a portion thereof is able to receive a head provided at the other end of the cable, whilst another portion thereof is able to retain said head, a channel being provided that allows the cable to be moved along said engagement means, so that the head comes to be locked within the locking portion.

This type of inner fastening, though allowing easy locking of the ring-shaped portion nevertheless presents problems during removal. The user, in order to be able to remove the chains, is obliged to work on the inner side of the wheel. In fact, he must find the device for fastening the inner ring on the inner part of the wheel and carry out unlocking of this device manually. This operation is very awkward, tiresome and complex. In fact the user must work in an uncomfortable position and is obliged to dirty his hands, which inevitably come into contact with the tire, and in addition he has difficulty in finding the inner ring-fastening device, which is concealed on the inner part of the wheel. Consequently, this operation of removing the chains proves to be excessively slow and tiresome.

Also know to the art are locking devices that have operating means that can be operated from the outside of the wheel to unlock the inner ring fastening element. Said locking devices have drawbacks due to the complexity of the fastening element.

EP 0 993 970 in the name of the same applicant discloses such a locking device, according to the preamble of claim 1, which can be operated from the outside of the wheel.

An object of the present invention is to eliminate the drawbacks of the prior art, providing a locking device for snow chains that is safe and at the same time practical and easy to use in the unlocking operation.

Another object of the present invention is to provide such a snow chain locking device that is economical and simple to make.

These objects are achieved in accordance with the invention with the characteristics listed in appended independent claim 1.

Advantageous embodiments of the invention are apparent from the dependent claims.

The locking device for snow chains according to the invention provides a fastening block connected to a first end of the side portion of the snow chains disposed on the inner side of the tire, a head connected to the other free end of the inner side portion and an operating device that acts on the fastening device. The head engages with the fastening block to close the ring in the inner side part.

The operating device can be operated from the outside of the tire by the user and has a cable that acts on the fastening block. Said cable is protected by means of two chains disposed laterally and parallel thereto and by means of crosspieces disposed transversally with respect to the cable and fixed to the links of the chains. In this manner the operating device is made more stable and operation thereof is improved.

The closing block is advantageously formed by two half-shells obtained from plates of sheared sheet metal. The two half-shells are spaced apart so as to define a housing that accommodates a locking mechanism. The locking mechanism comprises a lever pivoted to the two half-shells and having a tooth able to engage in a seat of the head fixed at the free end of the inner side portion. The cable of the operating device acts directly on the lever, so that the tooth can free the head connected to the free end of the inner side portion.

The lever can be operated manually by the user to disengage the head connected to the other end of the outer ring in case of jamming of the operating device.

The advantages of the locking device according to the invention are the extremely limited cost of the half-shells of the fastening block and the structural simplicity of the fastening mechanism.

Further characteristics of the invention will be made clearer by the detailed description that follows, referring to a purely exemplary and therefore non-limiting embodiment thereof, illustrated in the appended drawings, in which:
Figure 1 is an axonometric view illustrating a wheel, taken from the inward facing side and from the outward facing side, on which a snow chain with the locking device according to the invention is mounted;
Figure 2 is an enlarged plan view of the locking device in Figure 1, shown in the open position;
Figure 3 is an enlarged plan view of the locking device of Figure 1, shown in the closed position;
Figure 4 is a view from below of the locking device of Figure 2;
Figure 5 is a plan view of a fastening block of the locking device from which one of the covering half-shells has been removed;
Figure 6 is a plan view of a fastening lever of the locking device according to the invention;
Figure 7 is a plan view of a half-shell of the locking device according to the invention, seen from its inward-facing surface;
Figure 8 is a plan view of the device for operating the locking device according to the invention;
Figure 9 is a front view of a crosspiece of the operating device of Figure 7.

A locking device for snow chains according to the invention is described with the aid of the Figures.

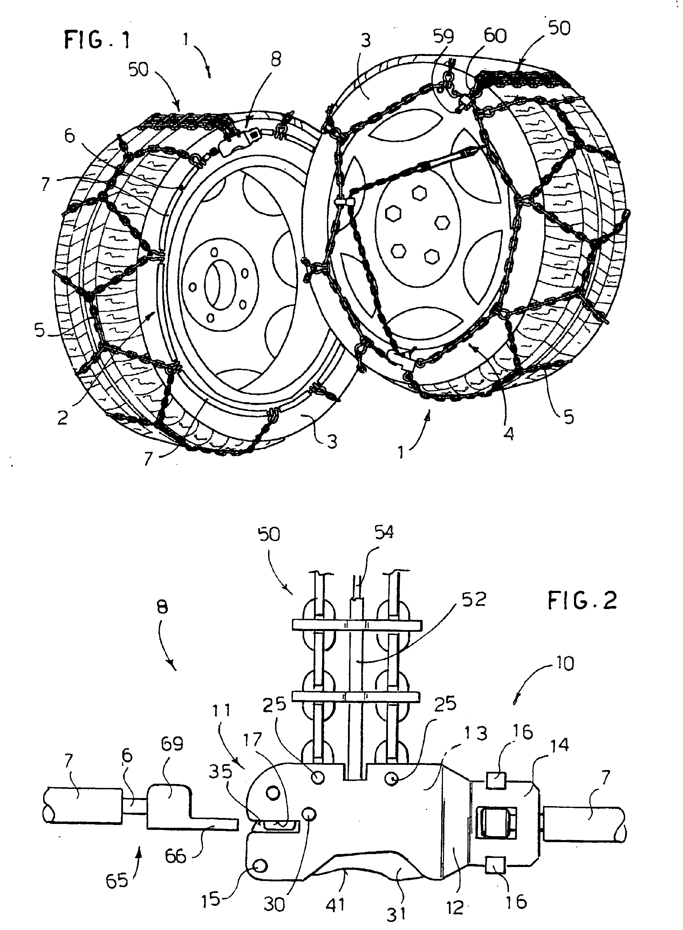

With reference to Figure 1, an anti-skid device, designated as a whole with reference numeral 1, comprises an inner side portion 2 which is able to be disposed on the inner part of the tire 3 and an outer side portion 4. The outer side portion 4 of the anti-skid device 1 is made in a known manner by means of a closed ring of chain. These two inner and outer portions 2 and 4 are connected by various elements 5 of anti-skid chain, variously disposed on the tread of the tire, in this case in a diamond shape.

The inner side portion 2 consists of an openable ring made from a steel cable 6 covered with a suitable sheath 7, preferably discontinuous. The cable 6 can be deformed to adapt to the curvature of the wheel.

The inner ring 2 is provided at its two opening ends with a locking device designated as a whole with reference numeral 8.

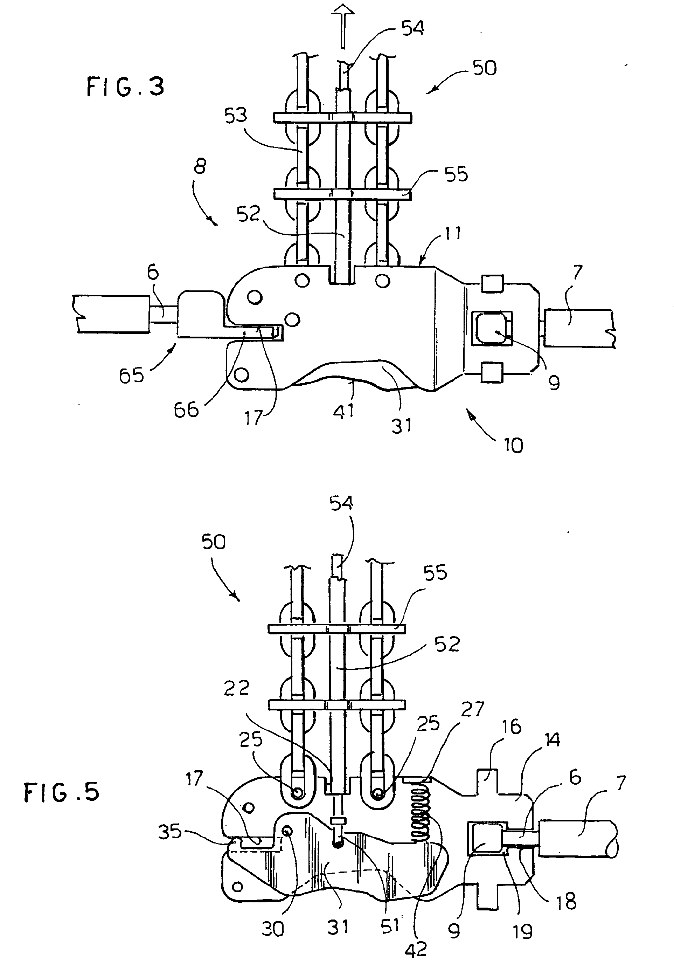

As shown in Figures 2-4, the locking device 8 comprises a fastening block 10 made up of two substantially specular half-shells 11 which can be connected to one another.

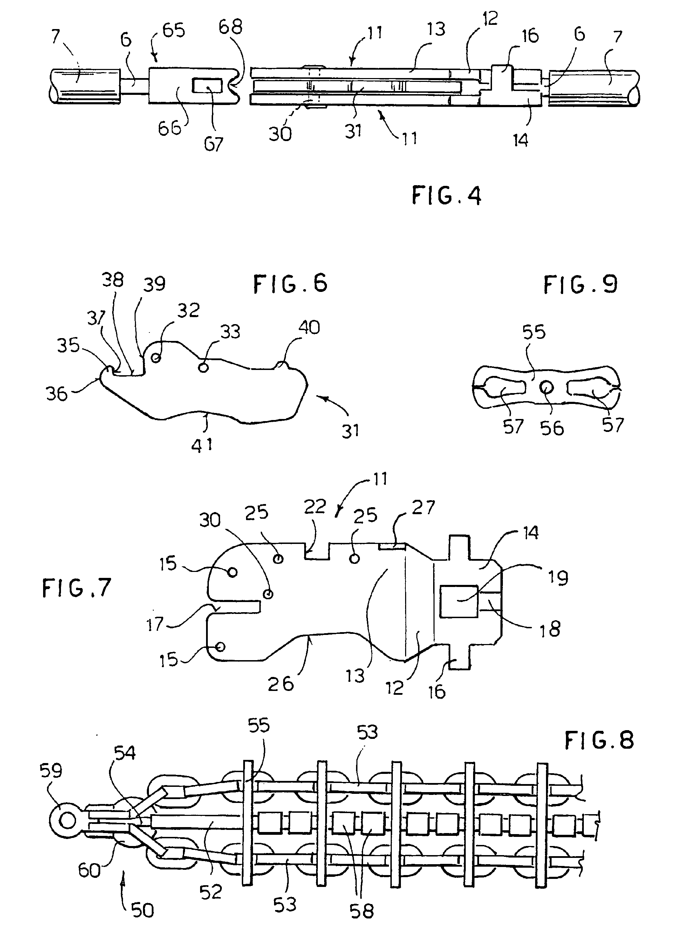

A half-shell 11 is described with reference to Figure 7.

The half-shell 11 is made from a sheet of metal by shearing so as to obtain a substantially rectangular plate. Said plate has a tapered part 12 that divides a body part 13 from an end part 14. In this manner, when the two end parts 14 of the half-shells are brought together, the two body parts 13 are spaced slightly apart from each other so as to form a gap within which the locking mechanism of the fastening block 10 is mounted.

A longitudinal slot 17 is provided in the forward end edge of the body 13 of the half-shell 11 and a transverse slot 22 is provided in the upper end edge of the body part 13. Two locking rivets 15 are provided above and below the longitudinal slot 17 and another two locking rivets 25 are provided on the left and on the right of the transverse slot 22. The lower end edge of the body part 13 has a recessed part 26 having a substantially trapezoid profile. In a central position of the body part 13, near the longitudinal slot 17, a pin 30 is provided. In the upper, rearward area of the body part 13 a tongue 27 is provided.

The end part 14 of the half-shell 11 has a rectangular opening 19 communicating with a semi-cylindrical channel 18, disposed axially and leading to the outside. A lip 16 is provided in the end part 14, protruding downward therefrom.

As shown in Figure 5, a locking lever 31 is pivoted on the pin 30 of the half-shell 11.

As shown in Figure 6 the locking lever 31 has a first hole 32 able to receive the pin 30 and a second hole 33 able to receive a hook 51 forming part of an operating device 50 which will be illustrated below. The locking lever 31 has at its front end a tooth 35 that has a cam-shaped front surface 36 and a flat rear surface 37. Behind the tooth 35 a seat 38 is provided, defined between the rear surface 37 of the tooth and an abutment surface 39. In the rear part of the locking lever 31 a small cylindrical protrusion 40 that protrudes upward is provided. The lower edge of the locking lever 31 has a slightly hollow profile 41.

As shown in Figure 5, after the locking lever 31 has been pivoted on the pin 30, a spring 42 is interposed between the protrusion 40 of the locking lever and the tongue 27 of the half-shell 11. The spring 42 acts in compression on the rearward part of the locking lever 31, forcing it to rotate in a clockwise direction about the pin 30, so that the rearward end of the locking lever 31 abuts against the tapered part 12 of the half-shell 11. In this condition the tooth 35 bars the entry to the longitudinal slot 17 of the half-shell 11 and the lower edge 41 of the lever 31 protrudes outward beneath the recessed part 26 of the half-shell 11.

The operating device 50 comprises two chain portions 53 the end links of which are engaged in the rivets 25 of the half-shell 11 and a cable 54 fixed to the hook 51 which engages in the hole 33 of the lever 31. The cable 54 of the operating device 50 is covered by a sheath 52 the end of which abuts on the transverse slot 22 of the half-shell 11.

In order to keep the chain portions of 53 symmetrically spaced apart with respect to the cable 54, crosspieces 55, shown more clearly in Figure 9, are disposed transversally with respect to the chain portions 53 and the cable 54 with sheath 52.

Each cross piece 55 has a central hole 56 through which the sheath 52 of the cable 54 extends and two side openings 57 which are fixed to two chain-links of the respective chain portions 53.

As shown in Figure 8, between the two crosspieces, on the sheath 52, two cylindrical blocks 58 are provided, with a greater diameter than that of the hole 56 so as to be able to abut against the crosspieces 55, avoiding sliding of the sheath 52, whilst the cable 54 is free to slide inside the sheath 52. Moreover the cylindrical blocks 58 act as protective and anti-wear elements for the sheath 52. At its end, the cable 54 has a hook 59 suitable to be gripped by the user for pulling.

The two ends of the portions of chain 53 end in a chain-link 60 which has a hook for fixing to a chain-link of the outer side portion 4 (Figure 1). In this manner the end hook 59 of the cable 54 appears on the outward facing side of the wheel. The user can thus pull the hook 59 of the cable 54 working from the outward facing side of the wheel.

Fixed to one end of the cable 6 of the inner ring is a cylindrical block 9 which is positioned inside the slot or opening 19 of the end part 14 of the half-shell 11, while the cable 6 exits the half-shell 11 passing in the cylindrical channel 18 of the end part 14. At this point the two half-shells 11 are coupled together, the lips 16 are folded back so as to fix the end part 14 of the half-shells 11 in an integral manner. The rivets 15 and 25, on the other hand, are responsible for fixing the body parts 13 of the half-shells, keeping them apart for accommodation of the locking lever 31. In this manner the cylindrical block 9 at the end of the cable 6 is situated inside the openings 19 in the half-shells 11, thus the block 10 is free to rotate with respect to the axis of the cable 6.

As shown in Figures 2 and 4, the remaining free end of the cable 6 of the inner ring 2, is fixed to a head 65 able to engage with the fastening block 10. The head 65 has a rectangular plate 66 having a thickness slightly smaller than the longitudinal slot 17 of the fastening block 10. As shown in Figure 4, the rectangular plate 66 has an opening 67 able to be engaged by the tooth 35 of the locking lever 31. An insertion groove 68 having a concave profile is provided in the free end of the plate 66. The head 65 has two raised flaps 69 which enclose the free end of the cable 6, allowing a relative rotation of the head 65 with respect to the axis of the cable 6.

Operation of the locking device 8 according to the invention will now be described. When the inner ring 2 is in the open position, the fastening block 10 and the head 65 are spaced apart, as in Figures 2 and 4. The user, when he wishes to close the inner ring 2, pushes the forward surface of the head 65 against the forward surface of the tooth 35 of the fastening block 10. The insertion groove 68 of the head 65 acts on the cam surface 36 of the tooth 35, causing a lowering of the tooth and thus a slight anticlockwise rotation of the lever 31 about the pin 30, against the action of the spring 42.

Consequently the tooth 35 is lowered slightly, freeing the entrance of the longitudinal slot 17 of the fastening block 10, thus the plate 66 of the head 65 enters the longitudinal slot 17 until the tooth 35 is situated beneath the slot 67 in the plate of the head 65. At this point the lever 31 rotates slightly clockwise through the action of the spring 42 and the tooth 35 rises, engaging in the slot 67 and locking the head 65. In this condition the head 65 cannot be removed from the longitudinal slot 17 because the end of the slot 67 abuts against the abutment rear surface 37 of the tooth 35.

To open the locking device 8, the user exerts traction on the cable 54, pulling the hook 59. Consequently the hook 51 of the cable 54, being raised upward, tends to cause the lever 31 to make an anticlockwise rotation and thus the tooth 35 is lowered, freeing the slot 67 of the head 65. In this manner the head 65 can be removed from the longitudinal slot of the fastening block 10.

Furthermore, in the event of jamming of the operating device 50, the user can act directly on the locking device 8, pushing the lower edge 41 of the lever 31 with his fingers, in this manner the lever 31 performs an anticlockwise rotation and the tooth 35 is lowered, freeing the slot 67 of the head 65.

Numerous variations and changes of detail within the reach of a person skilled in the art can be made to the present embodiment, without departing from the scope of the invention as set forth in the appended claims.

## Claims

1. A locking device for snow chains comprising an inner side portion (2) that can be closed in a ring, able to be positioned on the inner part of the tire (3), an outer side portion (4) able to be positioned on the outer part of the tire (3), said portions being joined by variously composed elements (5) achieving friction on the road, said locking device (8) comprising a fastening block (10) connected to a first end (9) of said inner side portion for closing in a ring of the inner side portion (2), a head (65) connected to the second free end of the inner side portion, able to engage with said fastening block and an operating device (50) that can be operated by the user from the outside of the tire, acting on said fastening block to open said ring of the inner side portion, said fastening block comprising two half-shells (11) assembled to each other and spaced apart so as to define a seating to accommodate a fastening mechanism, wherein said fastening mechanism comprises a locking lever (31) pivoted to said half-shell (11) and connected to said operating device (50), said locking lever (31) comprising engagement means (35) able to engage in a fastening relationship with said head (65) provided at the free end of said inner side portion,
**characterized in that**
said half-shells (11) are formed from a sheared sheet metal plate, and **in that** said locking lever (31) protrudes partially from said fastening block (10) so that it can be operated directly by the user by means of a pushing action for release of said head (65) from said fastening block (10).

2. A locking device according to claim 1, **characterized in that** said sheet metal plate of the half-shell (11) has a tapering transverse area (12) that divides the half-shell (11) into a body part (13) defining the seating to accommodate the fastening mechanism and an end part (14) receiving and retaining said first end (9) of the inner side portion (2).

3. A locking device according to claim 1 or 2, **characterized in that** said half-shells have a longitudinal slot (17) open toward the outside, defining an opening for entry of said head (65) connected to the second free end of the inner side portion (2).

4. A locking device according to anyone of the preceding claims, **characterized in that** said engagement means of the locking lever (31) are a tooth (35) protruding onto said longitudinal slot (17) and able to engage in a locking relationship in a slot (67) of said head (65) connected to the free end of the inner side portion.

5. A locking device according to anyone of the preceding claims, **characterized in that** said lever (31) is urged into the fastening position by elastic means (42).

6. A locking device according to claim 5, **characterized in that** said elastic means is a spring (42) disposed between an abutment part (40) of the lever and an abutment part (27) of the fastening block (10).

7. A locking device according to anyone of the preceding claims, **characterized in that** said operating device (50) comprises a cable (54) connected, by means of a first hook (51), to said locking lever (31).

8. A locking device according to anyone of the preceding claims, **characterized in that** said operating device (50) comprises two chain portions (53) disposed laterally and parallel to said cable (54) and crosspieces (55) disposed transversally with respect to said cable and fixed to the links of said chain portions (53).

9. A locking device according to claim 8, **characterized in that** two ends of said two chain portions (53) are fixed to rivets (25) that connect said two half-shells (11) of the fastening block (10) and the other two ends are fixed to a second hook (60) hooked to a link of said outer side portion (4).

10. A locking device according to claim 8 or 9, **characterized in that** said cable (54) is covered by a sheath (52) that extends through a hole (56) formed in a central position in said cross-pieces (55) and the end of said sheath (52) abuts on a transverse slot (22) formed in said two half-shells (11).

11. A locking device according to claim 10, **characterized in that** cylindrical blocks (58) acting as stop elements and abutting against said crosspieces (55) are provided on the sheath (52) of said cable (54) to avoid sliding of the sheath (52) and act as protective and anti-wear elements for the sheath (52).

## Patentansprüche

1. Verriegelungsvorrichtung für Reifenketten, umfassend einen inneren Seitenabschnitt (2), der in einem Ring geschlossen werden und an dem inneren Teil des Reifens (3) angeordnet werden kann, einen äußeren Seitenabschnitt (4), der an dem äußeren Teil des Reifens (3) angeordnet werden kann, wobei die Abschnitte durch verschiedenartig zusammengesetzte Elemente (5), die Reibung auf der Straße erzielen, verbunden sind, wobei die Verriegelungsvorrichtung (8) einen Befestigungsblock (10), der zum Schließen des inneren Seitenabschnitts (2) in einem Ring mit einem ersten Ende (9) des inneren Seitenabschnitts verbunden ist, einen Kopf (65), der mit dem zweiten freien Ende des inneren Seitenabschnitts verbunden und in der Lage ist, mit dem Befestigungsblock in Eingriff zu gelangen, und eine Betätigungsvorrichtung (50), welche durch den Benutzer von der Außenseite des Reifens betätigt werden kann und auf den Befestigungsblock einwirkt, um den Ring des inneren Seitenabschnitts zu öffnen, umfasst, wobei der Befestigungsblock zwei Halbschalen (11) umfasst, die zusammengesetzt und voneinander beabstandet sind, um einen Sitz zu definieren, um einen Befestigungsmechanismus aufzunehmen, wobei der Befestigungsmechanismus einen Verriegelungshebel (31) umfasst, der zu der Halbschale (11) schwenkbar ist und mit der Betätigungsvorrichtung (50) verbunden ist, wobei der Verriegelungshebel (31) Eingriffsmittel (35) umfasst, die in der Lage sind, mit dem Kopf (65), der an dem freien Ende des inneren Seitenabschnitts vorgesehen ist, in einer Befestigungsbeziehung in Eingriff zu gelangen, **dadurch gekennzeichnet, dass** die Halbschalen (11) aus einer gescherten Blechplatte gebildet sind und dass der Verriegelungshebel (31) teilweise von dem Befestigungsblock (10) vorragt, so dass er durch den Benutzer mittels Drückeinwirkung zum Lösen des Kopfes (65) aus dem Befestigungsblock (10) direkt betätigt werden kann.

2. Verriegelungsvorrichtung nach Anspruch 1, **dadurch gekennzeichnet, dass** die Blechplatte der Halbschale (11) eine kegelstumpfartig zulaufende Querfläche (12) aufweist, welche die Halbschale (11) in einen Körperteil (13), der den Sitz definiert, um den Befestigungsmechanismus aufzunehmen, und einen Endteil (14), der das erste Ende (9) des inneren Seitenabschnitts (2) aufnimmt und festhält, teilt.

3. Verriegelungsvorrichtung nach Anspruch 1 oder 2, **dadurch gekennzeichnet, dass** die Halbschalen einen Längsschlitz (17) aufweisen, der nach außen hin offen ist und eine Öffnung für das Eintreten des Kopfes (65) definiert, der mit dem zweiten freien Ende des inneren Seitenabschnitts (2) verbunden ist.

4. Verriegelungsvorrichtung nach einem beliebigen der vorangehenden Ansprüche, **dadurch gekennzeichnet, dass** die Eingriffsmittel des Verriegelungshebels (31) ein Zahn (35) sind, der auf den Längsschlitz (17) vorragt und in der Lage ist, in einen Schlitz (67) des Kopfes (65), der mit dem freien Ende des inneren Seitenabschnitts verbunden ist, in einer verriegelnden Beziehung einzugreifen.

5. Verriegelungsvorrichtung nach einem beliebigen der vorangehenden Ansprüche, **dadurch gekennzeichnet, dass** der Hebel (31) durch ein elastisches Mittel (42) in die Befestigungsposition gedrückt wird.

6. Verriegelungsvorrichtung nach Anspruch 5, **dadurch gekennzeichnet, dass** das elastische Mittel eine Feder (42) ist, die zwischen einem Anstoßteil (40) des Hebels und einem Anstoßteil (27) des Befestigungsblocks (10) angeordnet ist.

7. Verriegelungsvorrichtung nach einem beliebigen der vorangehenden Ansprüche, **dadurch gekennzeichnet, dass** die Betätigungsvorrichtung (50) ein Seil (54) umfasst, welches mittels eines ersten Hakens (51) mit dem Verriegelungshebel (31) verbunden ist.

8. Verriegelungsvorrichtung nach einem beliebigen der vorangehenden Ansprüche, **dadurch gekennzeichnet, dass** die Betätigungsvorrichtung (50) zwei Kettenabschnitte (53), die seitlich und parallel zu dem Seil (54) angeordnet sind, und Querstücke (55), die in Bezug auf das Seil quer angeordnet und an den Gliedern der Kettenabschnitte (53) befestigt sind, umfasst.

9. Verriegelungsvorrichtung nach Anspruch 8, **dadurch gekennzeichnet, dass** zwei Enden der zwei Kettenabschnitte (53) an Nieten (25) befestigt sind, welche die zwei Halbschalen (11) des Befestigungsblocks (10) verbinden, und die anderen zwei Enden an einem zweiten Haken (60) befestigt sind, der in ein Glied des äußeren Seitenabschnitts (4) eingehakt ist.

10. Verriegelungsvorrichtung nach Anspruch 8 oder 9, **dadurch gekennzeichnet, dass** das Seil (54) durch einen Mantel (52) umhüllt ist, der sich durch ein Loch (56) erstreckt, das in einer mittigen Position in den Querstücken (55) ausgebildet ist, und das Ende des Mantels (52) an einem Querschlitz (22) anliegt, der in den zwei Halbschalen (11) ausgebildet ist.

11. Verriegelungsvorrichtung nach Anspruch 10, **dadurch gekennzeichnet, dass** zylindrische Blöcke (58), die als Anschlagelemente dienen und gegen die Querstücke (55) anliegen, an dem Mantel (52) des Seils (54) vorgesehen sind, um ein Gleiten des Mantels (52) zu verhindern und als Schutz- und Verschleißschutzelemente für den Mantel (52) zu dienen.

## Revendications

1. Dispositif de verrouillage pour chaînes à neige comportant une section latérale interne (2) pouvant être fermée en un anneau, apte à être positionnée sur la partie interne du pneu (3), une section latérale externe (4) apte à être positionnée sur la partie externe du pneu (3), lesdites sections étant jointes par des éléments à composition différente (5) exerçant une friction sur la route, ledit dispositif de verrouillage (8) comprenant un bloc de rattachement (10) connecté à une première extrémité (9) de ladite section latérale interne pour refermer en anneau la section latérale interne (2), une tête (65) connectée par la seconde extrémité libre de la section latérale interne, apte à s'engager dans ledit bloc de rattachement et un dispositif d'actionnement (50) pouvant être actionné par l'utilisateur depuis l'extérieur du pneu et agissant sur ledit bloc de rattachement pour ouvrir ledit anneau formé par la section latérale interne, ledit bloc de rattachement comprenant deux demi-coques (11) assemblées l'une à l'autre et espacées de manière à définir un siège servant à loger un mécanisme de rattachement, dans lequel ledit mécanisme de rattachement comprend un levier de verrouillage (31) pivoté vers ladite demi-coque (11) et connecté audit dispositif d'actionnement (50), ledit levier de verrouillage (31) comprenant un moyen d'engagement (35) apte à établir une relation de rattachement avec ladite tête (65) placée à l'extrémité libre de ladite section latérale interne,
**caractérisé en ce que**
lesdites demi-coques (11) sont formées d'une plaque cisaillée de feuillard métallique et **en ce que** ledit levier de verrouillage (31) est partiellement en saillie depuis ledit bloc de rattachement (10), de sorte qu'il peut être actionné directement par l'utilisateur au moyen d'une action de poussée pour libérer ladite tête (65) dudit bloc de rattachement (10).

2. Dispositif de verrouillage selon la revendication 1, **caractérisé en ce que** ladite plaque en feuillard métallique de la demi-coque (11) a une zone transversale effilée (12) qui divise la demi-coque (11) en une partie de corps (13) définissant le siège servant à loger le mécanisme de rattachement et une partie d'extrémité (14) recevant et retenant ladite première extrémité (9) de la section latérale interne (2).

3. Dispositif de verrouillage selon la revendication 1 ou 2, **caractérisé en ce que** lesdites demi-coques présentent une fente longitudinale (17) ouverte vers l'extérieur, définissant une ouverture pour l'entrée de ladite tête (65) connectée à la seconde extrémité libre de la section latérale interne (2).

4. Dispositif de verrouillage selon l'une quelconque des revendications précédentes, **caractérisé en ce que** lesdits moyens d'engagement du levier de verrouillage (31) sont une dent (35) saillant vers ladite fente longitudinale (17) et apte à établir une relation de verrouillage dans une fente (67) de ladite tête (65) connectée à l'extrémité libre de la section latérale interne.

5. Dispositif de verrouillage selon l'une quelconque des revendications précédentes, **caractérisé en ce que** ledit levier (31) est poussé en position de rattachement par un moyen élastique (42).

6. Dispositif de verrouillage selon la revendication 5, **caractérisé en ce que** ledit moyen élastique est un ressort (42) disposé entre une partie de butée (40) du levier et une partie de butée (27) du bloc de rattachement (10).

7. Dispositif de verrouillage selon l'une quelconque des revendications précédentes, **caractérisé en ce que** ledit dispositif d'actionnement (50) comprend un câble (54) connecté au moyen d'un premier crochet (51) audit levier de verrouillage (31).

8. Dispositif de verrouillage selon l'une quelconque des revendications précédentes, **caractérisé en ce que** ledit dispositif d'actionnement (50) comprend deux sections de chaîne (53) disposées latéralement et parallèlement audit câble (54) et des pièces transversales (55) disposées transversalement par rapport audit câble et fixées aux liens desdites sections de chaîne (53).

9. Dispositif de verrouillage selon la revendication 8, **caractérisé en ce que** deux extrémités desdites deux sections de chaîne (53) sont fixées à des rivets (25) qui connectent lesdites deux demi-coques (11) du bloc de rattachement (10) et que les deux autres extrémités sont fixées à un second crochet (60) crocheté à un lien de ladite section latérale externe (4).

10. Dispositif de verrouillage selon la revendication 8 ou 9, **caractérisé en ce que** ledit câble (54) est recouvert d'une gaine (52) qui s'étend à travers un trou (56) pratiqué à une position centrale desdites pièces transversales (55) et que l'extrémité de ladite gaine (52) bute sur une fente transversale (22) pratiquée dans lesdites deux demi-coques (11).

11. Dispositif de verrouillage selon la revendication 10, **caractérisé en ce que** des blocs cylindriques (58) faisant office d'éléments d'arrêt et butant contre lesdites pièces transversales (55) sont prévus sur la gaine (52) dudit câble (54) pour éviter le glissement de la gaine (52) et font office d'éléments protecteurs et anti-usure pour la gaine (52).
